# Europäisches Patentamt

**European Patent Office**

**Office européen des brevets**

(11) Publication number: **0 112 269**
**B1**

## EUROPEAN PATENT SPECIFICATION

(45) Date of publication of patent specification: **15.07.87**  (51) Int. Cl.⁴: **F 16 J 15/36**

(21) Application number: **83630186.1**

(22) Date of filing: **11.11.83**

(54) Mechanical seal with back-up seal for gas-turbine engines.

(30) Priority: **20.12.82 US 451634**

(43) Date of publication of application:
**27.06.84 Bulletin 84/26**

(45) Publication of the grant of the patent:
**15.07.87 Bulletin 87/29**

(84) Designated Contracting States:
**DE FR GB IT SE**

(56) References cited:
**GB-A- 653 608**
**GB-A-2 080 891**

(73) Proprietor: **UNITED TECHNOLOGIES
CORPORATION**
**United Technologies Building 1, Financial Plaza
Hartford, CT 06101 (US)**

(72) Inventor: **Swanson, John E.**
**9 Finch Run**
**Avon Connecticut 06001 (US)**

(74) Representative: **Weydert, Robert et al**
**OFFICE DENNEMEYER S.à.r.l. P.O. Box 1502
L-1015 Luxembourg (LU)**

## Description

This invention relates to a sealing means for a bearing compartment of a twin spool gas turbine engine for sealing between two components having relative rotational movement therebetween, said sealing means having a seal plate carried by one of said components, an annularly shaped primary carbon seal carried by the other of said components and having a face bearing against said seal plate in sealing relationship to seal off between a high pressure region and a lower pressure region, an annular support means carrying said carbon seal, first and second annular members concentrically mounted relative to each other, a bellows disposed in a cavity defined by said annular members and said annular support means and having one end bearing against said annular support means to load said carbon seal against said seal plate, a back-up seal disposed between the high pressure region and said bellows and being axially in a line-on-line relationship with the carbon seal, and attachment means for connecting said annular members, carbon seal, bellows and back-up seal to the other of said components for imparting rotary motion thereto.

It is customary in a twin spool turbine type power plant to utilize a carbon seal to seal off the compartment housing the bearings supporting one of the shafts. Typically, a seal plate is attached to one rotating shaft and the carbon seal engaging the seal plate is rotatably connected to the other shaft. Means are provided to bias the carbon seal against its cooperating seal plate. In heretofore installations a labyrinth type of seal would be located in proximity to the compartment so that in the event of leakage of the mechanism supporting the primary carbon seal, the labyrinth seal would serve to minimize the same so as to prevent the oil escaping from the bearing compartment into the hostile environment of the engine or vice versa where fire could ensue.

A sealing means of the type referred to in the pre-characterizing portion is known from GB—A—653 608 wherein a bellows is used to load the carbon seal against a seal plate and a back-up seal is disposed between the bellows and the high pressure region. The back-up seal prevents leakage of high pressure fluid through the bellows in the event of failure thereof. The back-up seal is disposed in surrounding relationship with the bellows. The bellows is torsionally loaded during operation and no means are provided for loading the carbon seal against the seal plate after failure of the bellows.

In GB—A—2 080 891 a similar sealing means is described, with an emergency seal axially between the bellows and the carbon seal on the low pressure side of the bellows. In case of bellows failure high pressure fluid is applied to the emergency seal to urge it into engagement with the associated sealing surfaces. Also in GB—A—2 080 891 the bellows is torsionally loaded during operation.

The object of the invention is to provide an improved sealing means for a bearing compartment of a twin spool gas turbine engine.

In accordance with the invention the sealing device is characterized in that anti-rotational lug means are provided between said first annular member and said annular support means, that the back-up seal is disposed axially between the bellows and the carbon seal in the balance diameter thereof, and that the back-up seal is designed to allow a predetermined leakage flow from the high pressure region into the bellows cavity to pressure load the carbon seal against the seal plate in the event of bellows failure.

Accordingly, the primary carbon seal is pressure balanced closed in the event of bellows failure and anti-rotational lug means serve to restrain the primary face seal from circumferential movement relative to the annular members to which the bellows is fixed. The seal ring will maintain the pressure loading of the primary carbon seal in the event the bellows fails. The back-up seal is disposed axially line-on-line with the carbon seal and between the carbon seal and the bellows in the balance diameter of the carbon seal face.

Other features and advantages will be apparent from the specification and claims and from the accompanying drawings which illustrate an embodiment of the invention.

In the drawings:

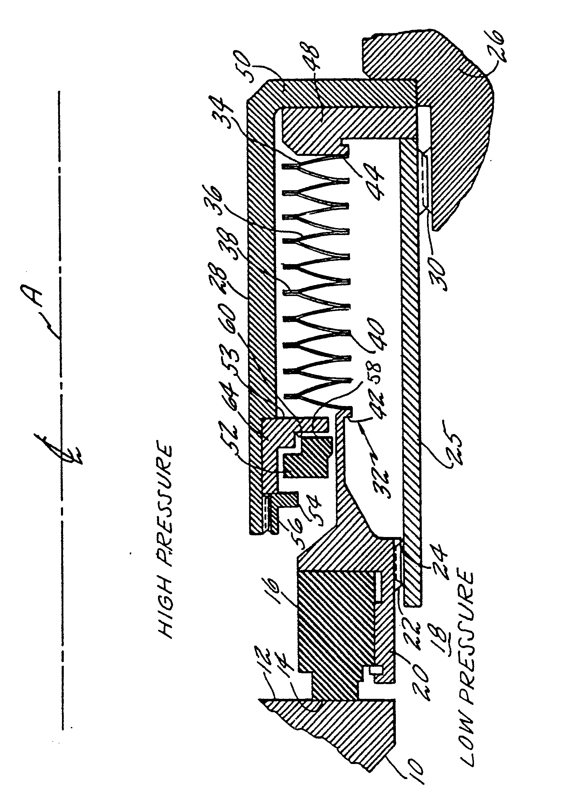

The sole figure is a partial view partly in schematic and partly in section showing the seal means of the invention.

The sole Figure shows a portion of the seal plate 10 which is suitably connected to the high speed shaft (rotates about the engine's center line A) of a twin spool gas turbine engine. An example of a gas turbine engine of the type where this invention would be efficacious is the JT9D manufactured by Pratt & Whitney Aircraft, a division of United Technologies Corporation the assignee of this patent application and which is incorporated herein by reference. The sealing face 12 of the seal plate is in intimate contact with the cooperating face 14 of the carbon seal 16. This carbon seal serves as the primary seal of the bearing compartment identified as reference numeral 18 and whose pressure is relatively low. Obviously, the bearing compartment which is suitably enclosed (not shown) contains the oil that is utilized to lubricate and cool the bearings mounted therein (not shown). The purpose of the primary carbon seal is to prevent the escapement of oil out of the compartment or the leakage of high pressure hot gases into the compartment to avoid fire internally of the engine.

Carbon seal 16 is formed in a ring and is supported to the annular shaped support member 20 which carries on its outer diameter anti-rotational lugs 22. Anti-rotational lugs 22, in turn mate with elongated spline 24 formed on annular member 25 which is rigidly connected to low speed shaft 26. As is well known, the high speed shaft carries the high pressure compressor and high temperature turbine and the low speed shaft carries the low pressure compressor and low temperature turbine hence the name twin spool.

The annular member 25 is driven by the low pressure spool shaft 26 by the spline arrangement 30. Sleeve 28 concentric to annular member 25 defines the cavity for containing the support for carbon seal 16 and the bellows assembly generally indicated by reference numeral 32, all being driven as an integral unit.

The bellows assembly comprises bellows 34 fabricated by individual convoluted elements 36 welded at the outer extremities 38 and 40. One end of bellows 34 is supported to the extending arm 42 unitary with the carbon seal support 20 and the opposite end 44 of bellows 34 is affixed to the disc 48 mounted adjacent to the radial arm 50 of sleeve 28. This urges the carbon seal support 20 leftwardly as viewed in the drawing to urge the face 14 of carbon seal 16 to bear against the face 12 of seal plate 10 forming a substantially leaktight seal. The anti-rotational lugs 22 while restraining circumferential movement can move axially. This prevents the higher speed seal plate from driving the support member 20.

A back-up seal is disposed axially from the carbon seal 16 and aligns line-on-line therewith and comprises a ring seal 52 of the piston ring type sandwiched between the radially depending arm 53 secured to the outer diameter of sleeve 28 and the depending arm 54 on nut 56 which in turn is threaded to sleeve 28. Ring seal 52 is sized so that its outer diameter bears against the inner diameter of carbon seal support 20 and permits a predetermined leakage so that there is a slight flow path from the high pressure side past nut 56 and past the seal 52 at the point of contact with the inner diameter of member 20 into the bellows cavity and through the bellows 34 (assume a leak occurred). The face 58 of ring seal 52 also bears against the face 60 of depending arm 62 formed on the annular sleeve 64.

By virtue of this arrangement, the primary carbon seal 16 is pressure balanced to the close or seal position in the event of bellows failure.

A substantially low heat generation and controlled air leakage of a bellows seal is achieved while providing a simple backup seal for the bellows.

Because of the line-on-line position of the back-up seal 52 relative to the primary carbon face seal 16, the back-up seal is in the carbon face seal balance diameter so that the loading provided by bellows 34 will maintain the carbon face seal at its requisite loading.

It should be understood that the invention is not limited to the particular embodiments shown and described herein, but that various changes and modifications may be made without departing from the spirit and scope of this novel concept as defined by the following claims.

## Claims

1. Sealing means for a bearing compartment of a twin spool gas turbine engine for sealing between two components having relative rotational movement therebetween, said sealing means having a seal plate (10) carried by one of said components, an annularly shaped primary carbon seal (16) carried by the other of said components and having a face (14) bearing against said seal plate (10) in sealing relationship to seal off between a high pressure region and a low pressure region, an annular support means (20) carrying said carbon seal (16), first and second annular members (25, 28) concentrically mounted relative to each other, a bellows (34) disposed in a cavity defined by said annular members (25, 28) and said annular support means (20) and having one end bearing against said annular support means (20) to load said carbon seal (16) against said seal plate (10), a back-up seal (52) disposed between the high pressure region and said bellows (34) and being axially in a line-on-line relationship with the carbon seal (16), and attachment means for connecting said annular members (25, 28), carbon seal (16), bellows (34) and back-up seal (52) to the other of said components for imparting rotary motion thereto, characterized in that anti-rotational lug means (22, 24) are provided between said first annular member (25) and said annular support means (20), that the back-up seal (52) is disposed axially between the bellows (34) and the carbon seal (16) in the balance diameter thereof, and that the back-up seal (52) is designed to allow a predetermined leakage flow from the high pressure region into the bellows cavity to pressure load the carbon seal (16) against the seal plate (10) in the event of bellows failure.

2. Sealing means according to claim 1, characterized in that said back-up seal is a piston-like ring bearing up against a sealing surface formed on said second annular member (28).

3. Sealing means according to claim 2, characterized in that a sleeve-like element (64) having a first radially outward depending arm (53) is supported to said second annular member (28), and that a nut (56) is threaded to the end of said second annular member (28) having a second radially outward depending arm (54) axially spaced from said first depending arm (53) sandwiching said piston-like seal ring (52) to prevent it from dislodging axially.

## Patentansprüche

1. Dichtvorrichtung für eine Lagerkammer eines Zweiwellen-Gasturbinentriebswerks zur Abdichtung zwischen zwei Komponenten, die zwischen sich eine Relativdrehbewegung haben, wobei die Dichtvorrichtung eine Dichtplatte (10) hat, welche durch eine der Komponenten gehaltert ist, eine ringförmige primäre Kohledichtung (16), die durch die andere Komponente gehaltert ist und eine Stirnfläche (14) hat, welche an der Dichtplatte (10) abdichtend anliegt, um zwischen einem Hochdruckgebiet und einem Niederdruckgebiet abzudichten, eine ringförmige Halteeinrichtung (20), die die Kohledichtung (16) trägt, ein erstes und ein zweites ringförmiges Teil (25, 28), die in bezug aufeinander konzentrisch befestigt sind, einen Federbalg (34), der in einem Hohlraum angeordnet ist, welcher durch die ringförmigen Teile (25, 28) und durch die ringförmige Halteeinrichtung (20) gebildet ist und mit einem Ende an der ringförmigen Halteeinrichtung (20) anliegt, um die Kohledichtung (16) gegen die Dichtplatte (10) zu drücken, eine Reservedichtung (52), die zwischen dem Hochdruckgebiet und dem Federbalg (34) und axial Linie auf Linie mit der Kohledichtung (16) angeordnet ist, und eine Befestigungseinrichtung zum Verbinden der ringförmigen Teile (25, 28), der Kohledichtung (16), des Federbalgs (34) und der Reservedichtung (52) mit der anderen Komponente, um ihnen eine Drehbewegung zu geben, dadurch gekennzeichnet, daß eine Drehung verhindernde Nasenvorrichtungen (22, 24) zwischen dem ersten ringförmigen Teil (25) und der ringförmigen Halteeinrichtung (20) vorgesehen sind, daß die Reservedichtung (52) axial zwischen dem Federbalg (34) und der Kohledichtung (16) in dem Ausgleichsdurchmesser derselben angeordnet ist und daß die Reservedichtung (52) so ausgelegt ist, daß sie eine vorbestimmte Leckströmung aus dem Hochdruckgebiet in den Federbalghohlraum gestattet, um die Kohledichtung (16) an der Dichtplatte (10) im Falle des Versagens des Federbalgs mit Druck zu beaufschlagen.

2. Dichtvorrichtung nach Anspruch 1, dadurch gekennzeichnet, daß die Reservedichtung eine kolbenartiger Ring ist, der an der Dichtfläche anliegt, die an dem zweiten rinkförmigen Teil (28) gebildet ist.

3. Dichtvorrichtung nach Anspruch 2, dadurch gekennzeichnet, daß ein büchsenartiges Element (64), das einen ersten, radial nach außen abstehenden Arm (53) hat, an dem zweiten ringförmigen Teil (28) abgestützt ist, und daß eine Mutter (56) auf das Ende des zweiten ringförmigen Teils (28) geschraubt ist, das einen zweiten radial nach außen abstehenden Arm (54) in axialem Abstand von dem ersten abstehenden Arm (53) hat, die die kolbenartige Ringdichtung (52) zwischen sich einschliessen, um sie daran zu hindern, sich axial zu entfernen.

**Revendications**

1. Dispositif d'étanchéité pour un compartiment de paliers d'un moteur à turbine à gaz à double corps, en vue d'assurer une étanchéité entre deux composants tournant d'un mouvement relatif l'un par rapport à l'autre, ce dispositif d'étanchéité comportant une plaque d'étanchéité (10) portée par l'un de ces composants, un joint d'étanchéité en carbone primaire (16) de forme annulaire, porté par l'autre composant et comportant une face (14) appliquée contre la plaque d'étanchéité (10), d'une manière étanche, pour établir une barrière étanche entre une zone à haute pression et une zone à basse pression, un support annulaire (20) portant le joint d'étanchéité en carbone (16), des premier et second organes annulaires (25, 28) montés concentriquement l'un par rapport à l'autre, un soufflet (34) disposé dans une cavité définie par les organes annulaires (25, 28) et le support annulaire (20) et dont une extrémité porte contre le support annulaire (20) afin de solliciter le joint d'étanchéité en carbone et le repousser contre la plaque d'étanchéité (10), un joint d'étanchéité de secours (52) disposé entre la zone à haute pression et le soufflet (34), ce joint d'étanchéité de secours étant en ligne, axialement, avec le joint d'étanchéité en carbone (16), et des moyens de fixation pour relier les organes annulaires (25, 28), le joint d'étanchéité en carbone (16), le soufflet (34) et le joint d'étanchéité de secours (52) à l'autre composant afin d'entraîner en rotation ces éléments, caractérisé en ce que des pattes anti-rotation (22, 24) sont prévues entre le premier organe annulaire (25) et le support annulaire (20), le joint d'étanchéité de secours (52) est disposé axialement entre le soufflet (34) et le joint d'étanchéité en carbone (16), dans le diamètre d'équilibre de celui-ci, et le joint d'étanchéité de secours (52) est conçu de manière à permettre l'écoulement d'une fuite prédéterminée à partir de la zone à haute pression vers et dans la cavité de soufflet, afin de solliciter sous pression le joint d'étanchéité en carbone (16) contre la plaque d'étanchéité (10), dans le cas d'une défaillance du soufflet.

2. Dispositif d'étanchéité suivant la revendication 1 caractérisé en ce que le joint d'étanchéité de secours est un anneau formant piston qui porte contre une surface d'étanchéité formée sur le second organe annulaire (28).

3. Dispositif d'étanchéité suivant la revendication 2 caractérisé en ce qu'un élément (64) en forme de douille, comportant une première bride s'étendant radialement vers l'extérieur (53), est supporté par le second organe annulaire (28), et un écrou (56) est vissé sur l'extrémité du second organe annulaire (28), cet écrou comportant une seconde bride (54) s'étendant radialement vers l'extérieur et espacée axialement de la première bride (53), pour prendre entre elle en sandwich l'anneau d'étanchéité (52) en forme de piston, afin d'empêcher sa sortie de son logement dans le sens axial.

HIGH PRESSURE

LOW PRESSURE